Europäisches Patentamt

European Patent Office

Office européen des brevets

(19)

(11) Veröffentlichungsnummer: **0 098 586**
**A1**

(12) # EUROPÄISCHE PATENTANMELDUNG

(21) Anmeldenummer: 83106559.4

(22) Anmeldetag: 05.07.83

(51) Int. Cl.³: **F 23 G 5/00**, F 27 D 3/10, B 01 J 8/00, B 65 G 69/18

(30) Priorität: 06.07.82 DE 3225281

(43) Veröffentlichungstag der Anmeldung: 18.01.84 Patentblatt 84/3

(84) Benannte Vertragsstaaten: **AT BE CH FR GB IT LI NL**

(71) Anmelder: **Deutsche Kommunal-Anlagen Miete GmbH, Arnulfstrasse 44, D-8000 München 2 (DE)**

(72) Erfinder: **Hillekamp, Klaus, Dr., Musäusstrasse 3, D-8000 München 60 (DE)**

(74) Vertreter: **Hartmann, Günter, Dr. Dipl.-Chem., Zeppelinstrasse 63, D-8000 München 80 (DE)**

(54) **Vorrichtung zum Beschicken eines Ofens, insbesondere eines Drehrohrofens, mit zu verbrennendem Gut, insbesondere Abfällen.**

(57) Vorrichtung zum Beschicken eines Reaktors, insbesondere eines Drehrohrofens, mit thermisch zu behandelndem Gut, insbesondere Abfällen, mit einem Zuführungskanal (19), durch den das über einen Füllbehälter (1) in den Zuführungskanal (19) eingebrachte Gut dem Reaktor zugeführt wird, und mit Dichtungseinrichtungen, die ein Eindringen und/oder Entweichen von Gasen in den bzw. aus dem Reaktor verhindern, in der zusätzlich zum Füllbehälter (1) ein Schüttbehälter (2) vorgesehen ist, der zwischen einer über dem Füllbehälter (1) liegenden Entladestelle und einer seitlich vom Füllbehälter (1) liegenden Beladestelle hin- und herbewegbar ist und am Boden eine verschließbare Schüttöffnung (3) und einen sowohl die nach oben gerichtete Füllöffnung (4) des Füllbehälters (1) als auch die Schüttöffnung (3) des Schüttbehälters (2) umfassenden Tauchverschluß (5) sowie einen weiteren, nur die Schüttöffnung (3) umfassenden Tauchverschluß (5) aufweist, in der unterhalb des Schüttbehälters (2) innerhalb des Tauchverschlusses (5) ein in die Sperrflüssigkeit (7) eingetauchter, anhebbarer und absenkbarer Wassertassenring (30) vorgesehen ist, der beim Beladen des Schüttbehälters (2) so weit angehoben werden kann, daß der Tauchrand (6) des Schüttbehälters (2) in die darin enthaltene Sperrflüssigkeit (7) eintaucht und die Schüttöffnung (3) des Schüttbehälters (2) gasdicht verschließt.

Hi-4/Dr.Hn/ju

Anmelder:  Deutsche Kommunal-Anlagen Miete GmbH
           Arnulfstr. 44
           8OOO München 2

Vorrichtung zum Beschicken eines Ofens, insbesondere eines Drehrohrofens, mit zu verbrennendem Gut, insbesondere Abfällen

Die in der vorliegenden Patentanmeldung beschriebene Erfindung betrifft eine Verbesserung der in der DE-OS 3O O4 557, auf deren Inhalt hier ausdrücklich Bezug genommen wird, beschriebenen Vorrichtung zum Beschicken eines Reaktors, insbesondere eines Drehrohrofens, mit thermisch zu behandelndem Gut, insbesondere Abfällen, mit einem Zuführungskanal, durch den mittels eines hin- und herbewegten Stößels das über einen Füllbehälter in den Zuführungskanal eingebrachte Gut dem Reaktor zugeführt wird, und mit Dichtungseinrichtungen, die ein Eindringen und/oder Entweichen von Gasen in den bzw. aus dem Reaktor verhindern, in der zusätzlich zum Füllbehälter ein Schüttbehälter vorgesehen ist, der zwischen einer über dem Füllbehälter liegenden Entladestellung und einer seitlich vom Füllbehälter liegenden Beladestellung hin- und herbewegbar ist und am Boden eine verschließbare Schüttöffnung und einen sowohl die nach oben gerichtete Füllöffnung des Füllbehälters als auch die Schüttöffnung des Schüttbehälters umfassenden Tauchverschluß, der mit einem umlaufenden Tauchrand in eine die nach oben gerichtete Füllöffnung des Füllbehälters umfassende Sperrflüssigkeit sowohl beim Beladen des Schüttbehälters mit dem thermisch zu behandelnden Gut bei dessen geschlossener Schüttöffnung und beim Entladen des Gutes aus dem Schüttbehälter durch die geöffnete Schüttöffnung in den Füllbehälter bei gasdicht verschlossener, nach oben gerichteter Beladeöffnung des Schüttbehälters als auch bei der Hin- und Herbewegung des Schüttbehälters zwischen diesen beiden Stellungen eingetaucht bleibt, sowie einen weiteren, nur die Schüfföffnung umfassenden Tauchverschluß mit einem Tauchrand aufweist.

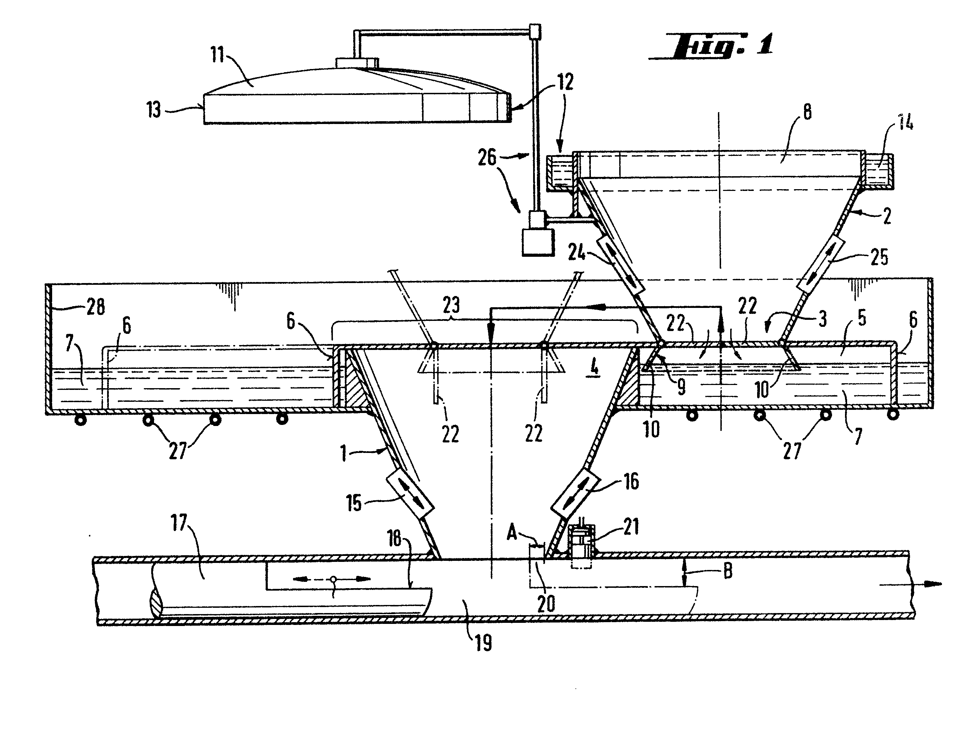

Die in der DE-OS 3004557 beschriebene Vorrichtung zum Beschicken eines Reaktors der vorgenannten Art, die in der Fig. 1 der beiliegenden Zeichnungen in schematischer Form dargestellt ist, erlaubt eine hermetische Abdichtung bei der Beschickung des Reaktors mit weniger störanfälligen Mitteln und damit einen längeren wartungsfreien Betrieb.

Beim technischen Betrieb dieser Anlage hat sich jedoch gezeigt, daß nicht nur beim Schließen des Deckels des Schüttbehälters, sondern auch beim notwendigen Absenken des Schüttbehälters zur Erzielung eines gasdichten Verschlusses der Schüttöffnung des Schüttbehälters Volumenverdrängungen auftreten, die zur Folge haben, daß der Druck im Reaktor ansteigt, und beim zu schnellen Absenken die verdrängte Luft bzw. Gas unter dem Rand der Tauchglocke herausgedrückt wird. Die Druckerhöhung im Reaktor stellt beim Reaktorbetrieb eine zusätzliche Störgröße dar, die regelungstechnisch über eine Drosselklappe im Gasauslaß des Reaktors kompensiert werden muß. Während der beim Schließen des Deckels des Schüttbehälters auftretende Druckanstieg im Reaktor aufgrund des verdrängten kleineren Volumens gerade noch kompensiert werden kann, insbesondere wenn der Deckel langsam geschlossen wird, tritt beim Absenken des Schüttbehälters im Reaktor eine Druckspitze auf, die regelungstechnisch nicht abgefangen werden kann. Zwar kann das Herausquellen der verdrängten Luft/Gas unter den Wassertassendeckeln durch sehr langsames Absenken des Schüttbehälters verhindert werden, der Reaktorbetrieb wird dadurch aber in nicht unerheblichem Ausmaße behindert.

Es wurde nun gefunden, daß die vorgenannten Probleme gemäß dem in der vorliegenden Patentanmeldung beschriebenen Verbesserungsvorschlag dadurch gelöst werden können, daß, anstatt den Schüttbehälter so weit abzusenken, daß die am unteren Ende des Schüttbehälters vorgesehenen Schürzen in das Sperrflüssigkeitsbad eintauchen und dort einen gasdichten Abschluß bilden, der gasdichte Abschluß dadurch erzielt wird, daß ein Wassertassenring von unten gegen die Schürze des Schüttbehälters gedrückt wird, wodurch ein gasdichter Abschluß erreicht wird.

Gegenstand der vorliegenden Patentanmeldung ist daher eine Vorrichtung der eingangs beschriebenen Art, die dadurch gekennzeichnet ist, daß unterhalb des Schüttbehälters in der Beladestellung innerhalb des Tauchverschlusses in einem Zwischenbehälter ein in die Sperrflüssigkeit eingetauchter, anhebbarer und absenkbarer Wassertassenring vorgesehen ist, der beim Beladen des Schüttbehälters so weit angehoben werden kann, daß der Tauchrand (hier gelegentlich auch als Schürze bezeichnet) des Schüttbehälters in die darin enthaltene Sperrflüssigkeit eintaucht und die Schüttöffnung des Schüttbehälters nach unten gasdicht verschließt.

Durch diesen Verbesserungsvorschlag kann die gesamte Eintragskonzeption wesentlich vereinfacht werden, weil dabei ein Absenken des Schüttbehälters, das einen großen mechanischen Aufwand erfordert und bei dem die obengenannten Druckprobleme auftreten, nicht mehr erforderlich ist.

Die beim Schließen des Deckels des Schüttbehälters auftretenden Volumenverdrängungsprobleme können dadurch gelöst werden, daß die Sperrflüssigkeit in dem zum gasdichten Verschließen des Deckels des Schüttbehälters vorgesehenen weiteren Tauchverschluß, vorzugsweise Wasser, vor dem Schließen des Deckels zunächst abgelassen wird, so daß die verdrängte Luft aus dem Verschluß entweichen kann, wonach bei geschlossenem Deckel die Sperrflüssigkeit wieder in die Wassertasse hineingepumpt wird, um einen gasdichten Abschluß des Deckels des Füllbehälters zu erzielen. Durch eine Füllstandsmessung wird sichergestellt, daß genau der Füllstand in dem Wassertassenverschluß des Deckels erreicht wird, der für den gasdichten Abschluß erforderlich ist. Die Füllstandshöhe in der Wassertasse wird so gewählt, daß den im Reaktor auftretenden minimalen und maximalen Drucken Rechnung getragen wird.

Gemäß einer Ausgestaltung der Erfindung kann der Druckausgleich auch dadurch erzielt werden, daß in dem umlaufenden Tauchverschluß ein durch den Tauchrand des Deckels abklemmbarer Durchgang zwischen dem Innenraum des Schüttbehälters und der äußeren Atmosphäre vorgesehen wird, der bei geöffnetem Deckel geöffnet ist und bei sich schließendem Deckel des Füllbehälters durch den in den Tauchverschluß eintauchenden Rand des Deckels abgeklemmt wird, wodurch wiederum ein gasdichter Verschluß erzielt wird.

Gemäß einer weiteren Ausgestaltung der Erfindung kann der umlaufende Tauchverschluß des Deckels des Schüttbehälters über ein mit Regeleinrichtungen (beispielsweise einer Pumpe, einem Magnetventil und einer Füllstandsmessung mit Endkontakten versehenes Leitungssystem mit dem unteren Tauchverschluß) des Schüttbehälters in Flüssigkeitsverbindung stehen zum steuerbaren Entleeren und Füllen des oberen Tauchverschlusses des Schüttbehälters mit der Sperrflüssigkeit. Das Ablassen und Einfüllen der Sperrflüssigkeit in den erforderlichen Mengen kann auf eine dem Fachmann bekannte Weise erfolgen.

Gemäß einer weiteren Ausgestaltung der Erfindung kann die Abdichtung des Schüttbehälters nach unten hin auch dadurch erreicht werden, daß das zum Abdichten des Deckels des Schüttbehälters angewendete Prinzip auch auf die Abdichtung des Schüttbehälters nach unten hin angewendet wird. Dabei ist wie bei der Abdichtung des Schüttbehälters nach oben hin zur Abdichtung desselben nach unten hin ein umlaufender Wassertassen-Tauchverschluß für die Aufnahme der Sperrflüssigkeit vorgesehen, in die der Rand eines innerhalb eines Zwischenbehälters hin- und herbeweglichen Deckels zum gasdichten Verschließen der Füllöffnung des Füllbehälters beim Beladen des Schüttbehälters eintaucht, wodurch wieder ein gasdichter Verschluß erzielt wird.

Volumenverdrängungsprobleme treten dabei nicht auf, da beim Absenken des Deckels zum Verschließen der Füllöffnung des Füllbehälters die Luft aus den Wassertassen jeweils entweichen kann, da diese nicht gefüllt sind. Erst nachdem der Deckel abgesenkt worden ist, wird die Sperrflüssigkeit in die Wassertasse eingepumpt, wodurch ein gasdichter Abschluß erzielt wird. Beim Ablassen der Sperrflüssigkeit aus der Wassertasse läuft diese in einen Sammelbehälter, in dem ein Überlauf vorgesehen sein kann, da beim Füllvorgang immer wieder Staub und kleinere Abfallteilchen in die Wassertasse geraten, die mit der Sperrflüssigkeit ausgeschwemmt werden und sich dann im Sammelbehälter absetzen können. Auch in diesem Falle ist es möglich, die Wasserstände in der Wassertasse über Füllstandsmessungen zu kontrollieren und die Flüssigkeitszufuhr bzw. -ableitung entsprechend zu schließen oder zu öffnen.

Der technische Vorteil dieser Ausgestaltung der Erfindung ergibt sich daraus, daß dabei der Schüttbehälter weder angehoben noch abgesenkt und auch nicht mehr hin- und hergefahren werden muß, das heißt, über dem Füllbehälter fest montiert sein kann. Dadurch kann der mechanische Aufbau der gesamten Vorrichtung erheblich vereinfacht werden. Hinzu kommt, daß das Flüssigkeitsvolumen in den Wassertassen äußerst gering ist, so daß nur noch wenig Sperrflüssigkeit verwendet zu werden braucht, die durch geeignete Maßnahmen beim Winterbetrieb gegen Erstarren bzw. Einfrieren leicht geschützt werden kann. Das Ablassen der Sperrflüssigkeit aus der Wassertasse hat zudem den Vorteil, daß innerhalb der Wassertassen auch bei ständigem Betrieb in der Vorrichtung sich kein Schmutz ansammelt. Das Volumen des Zwischenbehälters, in dem der Abschlußdeckel zum Verschließen der Füllöffnung des Füllbehälters hin- und herbewegt wird, kann auf ein Minimum reduziert werden, was für die Inertisierung zwischen den Füllvorgängen sehr vorteilhaft ist.

Die Erfindung wird nachstehend unter Bezugnahme auf die Figuren 1 bis 3 der beiliegenden Zeichnungen näher erläutert. Dabei zeigen:

Fig. 1    eine schematische Darstellung einer Beschickungsvorrichtung gemäß DE-OS 3004557, wobei der Schüttbehälter sich in seiner Beladestellung befindet;

Fig. 2    eine schematische Darstellung der gleichen Beschickungsvorrichtung gemäß dem Verbesserungsvorschlag der vorliegenden Patentanmeldung; und

Fig. 3    eine schematische Darstellung einer Beschickungsvorrichtung gemäß einer weiteren Ausgestaltung der vorliegenden Patentanmeldung, bei der Füll- und Schüttbehälter fest übereinander angeordnet sind.

Die in den beiliegenden Zeichnungen dargestellten Beschickungsvorrichtungen für einen nicht dargestellten Reaktor weisen einen Füllbehälter 1, über den in einen Zuführungskanal 19 zu behandelndes Gut, beispielsweise Abfälle, eingebracht werden können, auf. Mit Hilfe eines im Zuführungskanal 19 hin- und herbeweglichen Stößels 17 kann das im Zuführungskanal 19 befindliche Gut in den Reaktor eingebracht werden. Ferner ist ein mit einer Hub- und Schwenkeinrichtung 26 ausgestatteter Schüttbehälter 2 vorgesehen, der in der in Fig. 1 gezeigten Stellung bei abgehobenem Deckel 11 beladen werden kann. In der Beladestellung ist eine Schüttöffnung 3 durch Klappen 22 verschlossen. Die Klappen 22 werden in der Entladestellung nach unten geschwenkt, so daß die Schüttöffnung 3 frei wird und das in den Schüttbehälter 2 eingebrachte Gut in den Füllbehälter 1 entleert werden kann.

Am Schüttbehälter 2 ist ein Tauchverschluß 5 vorgesehen, der in eine Sperrflüssigkeit 7, die sich in einer Tauchtasse 28 befindet, mit seinem Tauchrand 6 eingetaucht ist. Die Sperrflüssigkeit 7 umgibt eine nach oben gerichtete Füllöffnung 4 des Füllbehälters 1, und diese Füllöffnung 4 wird auch vom Tauchverschluß 5 bzw. dessen Tauchrand 6 umfaßt. Wie aus der Fig. 1 zu ersehen ist, wird vom Tauchverschluß 5 die Füllöffnung 4 sowohl in der Beladestellung des Schüttbehälters 2 als auch in der Entladestellung des Schüttbehälters 2 abgedeckt. Diese Abdeckung bzw. dieser Verschluß nach außen bleibt auch aufrechterhalten während der Hin- und Herbewegung des Füllbehälters 2 zwischen der Beladestellung und der Entladestellung. Hierzu ist der Tauchverschluß 5 mit dem entsprechend bemessenen umlaufenden Tauchrand 6 ausgestattet, der immer in die Sperrflüssigkeit 7 eingetaucht bleibt, wobei bei der Eintauchtiefe die im Reaktor herrschenden Druckverhältnisse entsprechend zu berücksichtigen sind. Damit gewährleistet wird, daß der Tauchverschluß 5 auch in der in der Fig. 1 dargestellten Beladestellung des Schüttbehälters 2 die Füllöffnung 4 des Füllbehälters 1 abdeckt und nach außen abdichtet, besitzt der Tauchverschluß 5 ein entsprechend bemessenes Ansatzstück 23, durch das in der Fig. 1 gewährleistet wird, daß auch während des Beladens des Behälters 2 die Füllöffnung 4 des Füllbehälters 1 in die Abdichtung miteinbezogen ist.

Mit Hilfe einer Heizvorrichtung 27, die in Form einer Schlange ausgebildet sein kann und unterhalb der Tauchtasse 28 angeordnet ist, kann im Winterbetrieb die Sperrfüssigkeit 7 beheizt werden, um ein Einfrieren zu verhindern. Die Beheizung kann mit Hilfe der Reaktorabgase erfolgen oder auch mit einem Wärmeträger, wie Öl, der durch die Schlange der Heizeinrichtung 27 hindurchgeschickt wird.

Am unteren Teil des Schüttbehälters 2 ist ein weiterer Tauchverschluß 9 vorgesehen, dessen umlaufender Tauchrand 10, der die Schüttöffnung 3 und die darin befindlichen Klappen 22 umgibt, während der Beladestellung des Schüttbehälters 2, wie in der Fig. 1 dargestellt, in die Sperrflüssigkeit 7 eingetaucht ist. Auf diese Weise wird ein Zutritt und ein Entweichen von Gas durch undichte Stellen des Klappenverschlusses 22 in der Schüttöffnung 3 vermieden.

Beim Entleeren des Schüttbehälters 2 in der nicht dargestellten Entladestellung ist die Füllöffnung 8 des Schüttbehälters durch den Deckel 11 abgedeckt. Zur Abdichtung kann auch hier ein Tauchverschluß 12 am Deckel vorgesehen sein, dessen umlaufender Rand 13 in eine am oberen Teil des Schüttbehälters 2 vorgesehene Sperrflüssigkeit 14 eingetaucht ist. Die Sperrflüssigkeit 14 umgibt die Füllöffnung 8. Vor dem Entleeren ist es sinnvoll, die nach dem Verschließen im Schüttbehälter 2 verbliebene Luft weitgehend durch Inertgas zu verdrängen. Nach dem Entleeren des Schüttbehälters 2 wird dieser wiederum in die in der Fig. 1 dargestellte Beladestellung gebracht und der Tauchverschluß 9 in die Sperrflüssigkeit 7 eingetaucht. Bevor der Deckel 11 für die Wiederbeladung abgehoben wird, kann der Schüttbehälter 2 nun zunächst ausgespült werden, um eventuell beim Entleeren in diesen gelangte Schadgase zu entfernen.

Um eine Brückenbildung im Füllbehälter 1 sowie im Schüttbehälter 2 zu verhindern, können in den schrägen Seitenwänden Raumstößel 15 und 16 bzw. 24 und 25 angeordnet sein, die in die Behälterräume wechselweise hineinbewegt werden können. Ferner kann am Füllbehälter 1 eine nicht näher dargestellte Füllstandsmeßeinrichtung vorgesehen sein, so daß in Abhängigkeit von der Füllstandsmessung die Zuführung des Gutes aus dem Schüttbehälter 2 gesteuert werden kann. Insofern kann der Füllbehälter 1 als Zwischenbehälter wirken, durch den eine gesteuerte Zuführung des zu behandelnden Gutes gewährleistet wird.

Dadurch, daß der zusätzliche Schüttbehälter 2 vorgesehen ist, ist eine Kranbeschickung desselben über eine Schurre möglich.     Der Greiferinhalt des Krans ist dabei auf das Schüttbehältervolumen abzustimmen. Insofern können dann störanfällige Zwischentransportmittel entfallen.

Um ein Abscheren von festen Teilen im Übergangsbereich zwischen dem Füllbehälter 1 und dem Zuführungsrohr 19 zu verhindern, besitzt der Stößel 17 eine Ausnehmung 18, die so bemessen ist, daß bei der vorderen Stößelstellung, welche in der Fig. 1 gestrichelt dargestellt ist, ein Abstand B zwischen dem Füllbehälter 1 und dem Zuführungsrohr 19 geschaffen wird. Zum anderen wird der Stößel 17 mit der Ausnehmung 18 nur so weit in den Zuführkanal hereingeschoben, daß zwischen der Vorderkante des Vollstößels und dem Zuführkanal ein Abstand A und im Bereich der Ausnehmung ein Freiraum B zwischen dem eingeschobenen Stößelteil und dem Zuführungskanal 19 verbleibt.

Durch eine in der Nähe des Übergangsbereiches 20 vorgesehene Abstreifeinrichtung 21 wird verhindert, daß das Gut, das sich bereits in dem zum Reaktor geführten Teil des Zuführungskanals befindet, vom zurückgeführten Stößel 17 mitgenommen wird. Es kann sich dabei um einen Rechen oder um eine Abschabkante oder einen Niederhalter handeln. Diese Abstreifeinrichtung wird während des Zurückziehens des Stößels in das Zuführungsrohr 19 eingeschoben. Mit dem Niederhalter können auch sperrige Teile, die wider Erwarten in den Füllbehälter gelangt sind und die Zufuhr des Gutes zum Reaktor behindern, so niedergedrückt werden, daß der Stößel sie stirnseitig erfassen kann, um sie so in den Reaktor zu schieben.

Beim Beschicken läßt sich die folgende Arbeitsweise der dargestellten Vorrichtung durchführen:

Während der Schüttbehälter 2 sich in der in der Fig. 1 gezeigten Beladestellung befindet, bewegt sich der Stößel 17 im Führungskanal 19 hin und her, wodurch das im Füllbehälter 1 befindliche Gut aus diesem allmählich entleert wird und in aufgelockertem Zustand dem Reaktor zugeführt werden kann. Wie eingangs schon erwähnt, läßt sich hierdurch der Wirkungsgrad des Reaktors bei der thermischen Behandlung des Gutes erheblich steigern, da der Reaktorraum besser genutzt wird. Mit Hilfe einer nicht näher beschriebenen Füllstandsmeßeinrichtung läßt sich der Füllungsgrad im Füllbehälter 1 feststellen und in Abhängigkeit davon der beladene Schüttbehälter 2, auf welchem der Deckel 11 gasdicht aufgesetzt ist, in die nicht dargestellte Entladestellung verbringen. Vor dem Entleeren kann die im Leerraum des Schüttbehälters 2 verbliebene Luft durch Inertgas verdrängt werden. Zur Entleerung des Schüttbehälters 2 werden die Klappen 22 geöffnet und das Gut in den als Zwischenbehälter wirkenden Füllbehälter 1 eingebracht. Die Klappen 22 werden ·wieder verschlossen und der Schüttbehälter wird in die Beladestellung zurückgebracht. Bevor der Deckel 11 abgehoben wird, kann der Schüttbehälter 2 noch ausgespült werden, um evtl. beim Entleerungsvorgang in diesen gelangte Schadgase zu entfernen. Anschließend kann der Schüttbehälter 2 dann wieder beladen werden.

Um den Schüttbehälter 2 zwischen seinen beiden Stellungen hin- und herbewegen zu können, können Schienenführungen, die der Einfachheit halber nicht näher dargestellt sind, vorgesehen sein. Aufgrund des am Schüttbehälter 2 vorgesehenen Tauchverschlusses 9 ist es notwendig, daß der Schüttbehälter vom Verbringen aus der Beladestellung in die Entladestellung um einen bestimmten Betrag angehoben wird. Diese Hubbewegung kann durch     Schienen oder durch ein ebenfalls nicht näher dargestelltes Kniehebelgelenk, welches am Schüttbehälter 2 beispielsweise über ein Parallellenkersystem angreift, ausgeführt werden.

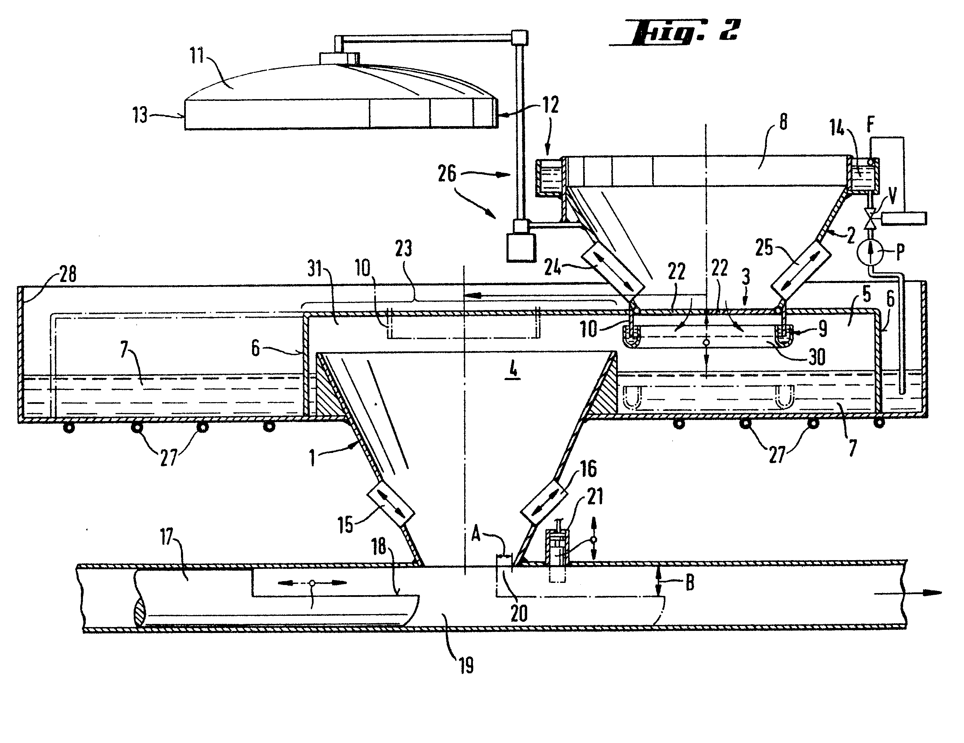

Die in Fig. 2 der beiliegenden Zeichnungen dargestellte erfindungsgemäße Vorrichtung zum Beschicken eines Reaktors unterscheidet sich von der Vorrichtung gemäß DE-OS 30 04 557 dadurch, daß unterhalb des Schüttbehälters 2 innerhalb des Tauchverschlusses 5 in einem Zwischenbehälter 31 ein in die Sperrflüssigkeit 7 eingetauchter, anhebbarer und absenkbarer Wassertassenring 30 vorgesehen ist, der beim Beladen des Schüttbehälters 2 so weit angehoben werden kann, daß der Tauchrand 10 des Schüttbehälters 2 in die darin enthaltene Sperrflüssigkeit 7 eintaucht und die Schüttöffnung 3 des Schüttbehälters 2 gasdicht verschließt.

Der zum Verschließen der nach oben gerichteten Beladeöffnung 8 des Schüttbehälters 2 vorgesehene Deckel 11 weist einen weiteren Tauchverschluß 12 auf, dessen umlaufender Tauchrand 13 in eine die Beladeöffnung 8 umfassende Sperrflüssigkeit eintauchen kann.

Gemäß einer Ausgestaltung der Erfindung kann der umlaufende Tauchverschluß 12 einen durch den Tauchrand 13 des Deckels 11 abklemmbaren Durchgang zwischen dem Innenraum des Schüttbehälters 2 und der äußeren Atmosphäre zum Druckausgleich beim Schließen des Deckels 11 aufweisen, der beispielsweise von einem Schlauch begrenzt sein kann, der durch den Tauchrand 13 des Deckels 11 beim Absenken desselben abgeklemmt wird, um so einen gasdichten Verschluß zu erzielen, und beim Anheben des Deckels 11 sich wieder öffnet.

Gemäß einer weiteren Ausgestaltung kann der umlaufende Tauchverschluß 12 auch über ein mit üblichen Regeleinrichtungen (z.B. eine Pumpe P, ein Magnetventil V, eine Füllstandsmeßanzeige F) versehenes Leitungssystem mit dem Tauchverschluß 5 in Flüssigkeitsverbindung stehen zum steuerbaren Entleeren und Füllen des Tauchverschlusses 12 mit der Sperrflüssigkeit.

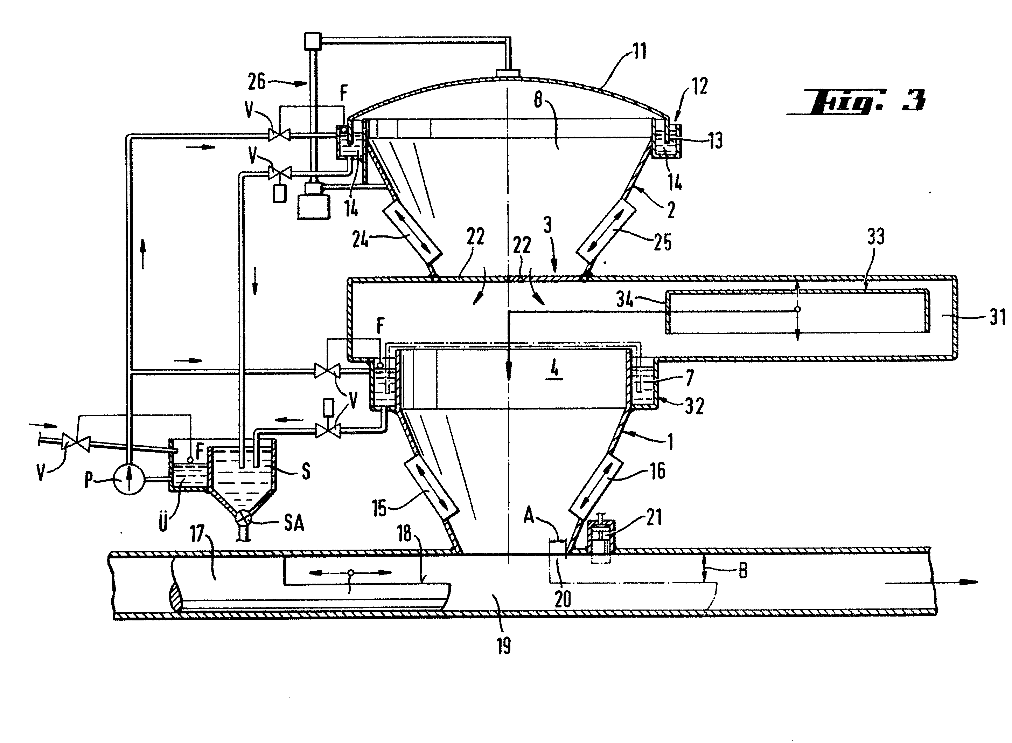

Bei der in der Fig. 3 der beiliegenden Zeichnung dargestellten Ausführungsform der in der vorliegenden Patentanmeldung beschriebenen Erfindung ist der Schüttbehälter 2 über dem Füllbehälter 1 fest montiert und der Füllbehälter 1 ist mit einem umlaufenden Wassertassen-Tauchverschluß 32 für die Aufnahme der Sperrflüssigkeit 7 versehen, in die der Rand

34 eines innerhalb eines gasdichten Zwischenbehälters 31 hin- und herbeweglichen Deckels 33 zum gasdichten Verschließen der Füllöffnung 4 des Füllbehälters 1 beim Beladen des Schüttbehälters 2 eintaucht.

Der Wassertassenverschluß 32 des Füllbehälters 1 und der Tauchverschluß 12 des Schüttbehälters 2 stehen bei der dargestellten Ausführungsform mittels eines mit Regeleinrichtungen (beispielsweise einer Pumpe P, einem oder mehreren Magnetventilen V und einer oder mehreren Füllstandsmeßanzeigen F) versehenen Leitungssystems darart miteinander in Flüssigkeitsverbindung, daß beide Verschlüsse unabhängig voneinander entleert und gefüllt werden können. Die hierfür erforderlichen Einrichtungen sind dem Fachmanne an sich bekannt und brauchen hier nicht näher beschrieben zu werden. Dies gilt auch für den in der Fig. 3 der beiliegenden Zeichnungen dargestellten Sammelbehälter S mit Überlauf Ü und Sumpfabzug SA, die vorgesehen sein können, um die beim Füllen immer wieder in die Verschlüsse gelangenden Staub- und sonstigen Abfallteilchen auszuschwemmen, die sich dann im Sammelbehälter S absetzen und abgezogen werden können. Dadurch wird sichergestellt, daß sich auch bei ständigem Betrieb der Vorrichtung innerhalb der Wassertassen-Verschlüsse kein Schmutz ansammelt.

Der Deckel 33 kann innerhalb des Zwischenbehälters 31 beim Be- und Entladen des Schüttbehälters 2 mechanisch, hydraulisch oder elektrisch seitlich hin- und herbewegt werden, um so den gasdichten Verschluß oder das Öffnen der Schüttöffnung 4 des Füllbehälters 1, je nach Wunsch, zu bewirken.

Patentansprüche
===============

1.   Vorrichtung zum Beschicken eines Reaktors, insbesondere eines Drehrohrofens, mit thermisch zu behandelndem Gut, insbesondere Abfällen, mit einem Zuführungskanal, durch den mittels eines hin- und herbewegten Stößels das über einen Füllbehälter in den Zuführungskanal eingebrachte Gut dem Reaktor zugeführt wird, und mit Dichtungseinrichtungen, die ein Eindringen und/oder Entweichen von Gasen in den bzw. aus dem Reaktor verhindern, in der zusätzlich zum Füllbehälter ein Schüttbehälter vorgesehen ist, der zwischen einer über dem Füllbehälter liegenden Entladestellung und einer seitlich vom Füllbehälter liegenden Beladestellung hin- und herbewegbar ist und am Boden eine verschließbare Schüttöffnung und einen sowohl die nach oben gerichtete Füllöffnung des Füllbehälters als auch die Schüttöffnung des Schüttbehälters umfassenden Tauchverschluß, der mit einem umlaufenden Tauchrand in eine die nach oben gerichtete Füllöffnung des Füllbehälters umfassende Sperrflüssigkeit sowohl beim Beladen des Schüttbehälters mit dem thermisch zu behandelnden Gut bei dessen geschlossener Schüttöffnung und beim Entladen des Gutes aus dem Schüttbehälter durch die geöffnete Schüttöffnung in den Füllbehälter bei gasdicht verschlossener, nach oben gerichteter Beladeöffnung des Schüttbehälters als auch bei der Hin- und Herbewegung des Schüttbehälters zwischen diesen beiden Stellungen eingetaucht bleibt, sowie einen weiteren, nur die Schüttöffnung umfassenden Tauchverschluß mit einem Tauchrand aufweist,
dadurch   g e k e n n z e i c h n e t  , daß unterhalb des Schüttbehälters (2) innerhalb des Tauchverschlusses (5) ein in die Sperrflüssigkeit (7) eingetauchter, anhebbarer und absenkbarer Wassertassenring (30) vorgesehen ist, der beim Beladen des Schüttbehälters (2) so weit angehoben werden kann, daß der Tauchrand (10) des Schüttbehälters (2) in die darin enthaltene Sperrflüssigkeit (7) eintaucht und die Schüttöffnung (3) des Schüttbehälters (2) gasdicht verschließt.

2. Vorrichtung nach Anspruch 1, dadurch gekennzeichnet, daß ein zum Verschließen der nach oben gerichteten Beladeöffnung (8) des Schüttbehälters (2) vorgesehener Deckel (11) einen weiteren Tauchverschluß (12) aufweist, dessen umlaufender Tauchrand in eine die Beladeöffnung (8) umfassende Sperrflüssigkeit getaucht ist.

3. Vorrichtung nach Anspruch 1 und/oder 2, dadurch gekennzeichnet, daß der umlaufende Tauchverschluß (12) einen durch den Tauchrand (13) des Deckels (11) abklemmbaren Durchgang zwischen dem Innenraum des Schüttbehälters (2) und der äußeren Atmosphäre zum Druckausgleich beim Schließen des Deckels (11) aufweist.

4. Vorrichtung nach mindestens einem der Ansprüche 1 bis 3, dadurch gekennzeichnet, daß der umlaufende Tauchverschluß (12) über ein mit Regeleinrichtungen versehenes Leitungssystem mit dem Tauchverschluß (5) in Flüssigkeitsverbindung steht zum steuerbaren Entleeren und Füllen des Tauchverschlusses (12) mit der Sperrflüssigkeit.

5. Vorrichtung nach mindestens einem der Ansprüche 1 bis 4, dadurch gekennzeichnet, daß der Schüttbehälter (2) über dem Füllbehälter (1) fest montiert ist, daß der Füllbehälter (1) mit einem umlaufenden Wassertassen-Tauchverschluß (32) für die Aufnahme der Sperrflüssigkeit (7) versehen ist, in die der Rand (34) eines innerhalb eines gasdichten Zwischenbehälters (31) hin- und herbeweglichen Deckels (33) zum gasdichten Verschließen der Füllöffnung (4) des Füllbehälters (1) beim Beladen des Schüttbehälters (2) bei verschlossener Schüttöffnung (3) eintaucht.

6. Vorrichtung nach Anspruch 5, dadurch gekennzeichnet, daß der Wassertassen-Verschluß (32) des Füllbehälters (1) und der Tauchverschluß (12) des Schüttbehälters (2) mittels

0098586

eines mit Regeleinrichtungen versehenen Leitungssystems derart miteinander in Flüssigkeitsverbindung stehen, daß beide Verschlüsse unabhängig voneinander entleert und gefüllt werden können.

7. Vorrichtung nach Anspruch 5 und/oder 6, dadurch gekennzeichnet, daß der Deckel (33) innerhalb des Zwischenbehälters (31) beim Be- und Entladen des Schüttbehälters (2) mechanisch, hydraulisch oder elektrisch seitlich hin- und herbewegt werden kann.

-- . --

**Fig. 1**

0098586

1/3

Fig. 2

2/3

0098586

Fig: 3

3/3

0098586

Europäisches
Patentamt

**EUROPÄISCHER RECHERCHENBERICHT**

0098586
Nummer der Anmeldung

EP  83 10 6559

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-C-  226 707  (TRUBIN) | | F 23 G    5/00 |
| | | | F 27 D    3/10 |
| | --- | | B 01 J    8/00 |
| A | DE-A-1 934 916  (STEINMÜLLER) | | B 65 G   69/18 |
| | --- | | |
| A | DE-A-2 101 171 (ÖSTERREICHISCH-ALPINE MONTANGESELLSCHAFT) | | |
| | --- | | |
| A | FR-A-  654 415  (VAN DER DOES DE BYE) | | |
| | --- | | |
| A | DE-C-  144 196  (TAUER) | | |
| | ----- | | **RECHERCHIERTE SACHGEBIETE (Int. Cl. ³)** |
| | | | F 23 G |
| | | | F 23 K |
| | | | F 27 D |
| | | | F 27 B |
| | | | B 01 J |
| | | | B 65 G |

Der vorliegende Recherchenbericht wurde für alle Patentansprüche erstellt.

| Recherchenort DEN HAAG | Abschlußdatum der Recherche 22-09-1983 | Prüfer COULOMB J.C. |
|---|---|---|